# EUROPÄISCHE PATENTANMELDUNG

(11) **EP 1 428 777 A1**
(43) Veröffentlichungstag der Anmeldung: **16.06.2004**
(21) Anmeldenummer: 03090376.9
(22) Anmeldetag: 05.11.2003
(51) Int. Cl.: B65G 43/10

(54) **Förderer für Güter, insbesondere Behälter für Gepäckstücke, und Verfahren zur Steuerung eines Förderers für Güter**

(30) Priorität: 09.12.2002 DE 10257466
(71) Anmelder: SIEMENS AKTIENGESELLSCHAFT, 80333 München (DE)
(72) Erfinder: Brixius, Wolfgang, 91077 Neunkirchen A. Br (DE); Gräfer, Dominik, 90427 Nürnberg (DE); Hoene, Albrecht Dr., 91074 Herzogenaurach (DE)

(57) **Zusammenfassung**

Die Erfindung betrifft einen Förderer 1 für Güter 5, insbesondere Behälter für Gepäckstücke, mit zumindest zwei hintereinander geschalteten endlos umlaufenden Förderbändern 6, 7, in Förderrichtung 4 gesehen einem Förderband 6 und einem Folgeförderband 7, die jeweils von einem Antriebsmotor 22 mit lastmomentabhängiger Drehzahl angetrieben werden, wobei die Förderbänder 6, 7 derart in Förderrichtung 4 hintereinander angeordnet sind, dass die vom Förderband 6 beförderten Güter 5 vom Folgeförderband 7 übernommen werden. Um einen kostengünstigen Förderer 1 mit einem lastmomentabhängigen Antriebsmotor 22 anzugeben, der eine lastmomentunabhängige Fördergeschwindigkeit v bietet, wird vorgeschlagen, dass jeweils das Gewicht der auf den Förderbändern 6, 7 liegenden Güter 5 bestimmt und die Drehzahl des zum jeweiligen Förderband 6, 7 gehörenden Antriebsmotors 22 in Abhängigkeit vom Gewicht der auf dem Förderband 6, 7 liegenden Güter 5 gesteuert wird.

## Beschreibung

Die Erfindung betrifft einen Förderer für Güter gemäß dem Oberbegriff des Anspruchs 1 und ein zugehöriges Verfahren gemäß dem Oberbegriff des Anspruchs 8.

Es ist bekannt, dass Förderer zum Transport von Gütern eingesetzt werden, insbesondere in Flughafenanlagen von Gepäckstücken. Dabei befindet sich ein Gepäckstück oder mehrere Gepäckstücke in einem zugeordneten Behälter. Die Behälter werden vom Förderer mittels Förderbändern transportiert. Der Förderer - allgemein wird unter einem Förderer immer ein Förderelement mit Antrieb, Förderband, Quertraversen usw. verstanden - besteht dabei aus einzelnen Förderabschnitten, die jeweils das endlos umlaufende Förderband und einen Motor zum Antrieb umfassen. Die Förderabschnitte sind derart in Reihe geschaltet, dass ihre Förderbänder die darauf beförderten Behälter in Förderrichtung einander übergeben, so dass die in den Behältern befindlichen Gepäckstücke von einer Startposition zu einer Zielposition transportiert werden können. Ferner dient der Förderer auch als Zwischenspeicher für die Gepäckstücke. Ein am Vorabend des Abflugtages aufgegebenes Gepäckstück wird während der folgenden Nacht ohne Unterbrechung im Kreis gefahren. Erst kurz vor dem Abflug werden die Gepäckstücke vom Förderer an der Zielposition abgelegt und weiter verladen.

Die Fördergeschwindigkeit der Förderabschnitte ist dabei abhängig von den transportierten Gütern. Die unterschiedlichen Fördergeschwindigkeiten verringern die Kapazität des Zwischenspeichers und erschweren das Datentracking und/oder eine vereinzelte Behandlung eines Gutes.

Deshalb werden entweder die Förderbandlängen eines Förderabschnittes verkürzt, um eine geringere Anzahl an Gütern auf einem Förderband zu transportieren, oder es werden geregelte Antriebe mit Drehzahlrückführung eingesetzt. Außerdem ist die Verwendung von drehzahlstabilen Servomotoren bekannt.

Diese Förderer sind relativ kostenintensiv.

Aufgabe der vorliegenden Erfindung ist es, einen kostengünstigen Förderer zu vorzuschlagen, der die obengenannten Nachteile vermeidet.

Die auf den Förderer bezogene Aufgabe wird durch die Merkmale des Anspruchs 1 und die auf das Verfahren bezogene durch die Merkmale des Anspruchs 8 gelöst. Vorteilhafte Ausgestaltungen sind in den Unteransprüchen angegeben.

Die Lösung der Aufgabe sieht für den Förderer vor, dass jeweils das Gewicht der auf den Förderbändern liegenden Güter bestimmt und die Drehzahl des zum jeweiligen Förderband gehörenden Antriebsmotors in Abhängigkeit vom Gewicht der auf dem Förderband liegenden Güter gesteuert wird. Die Lösung sieht vor, dass die lastmomentabhängige Ist-Drehzahl des Antriebsmotors und somit die daran fest gekoppelte Ist-Fördergeschwindigkeit des Förderbandes bei Lastmomentänderung durch eine gesteuerte Anpassung der Soll-Drehzahl konstant gehalten wird. Eine Rückführung der Ist-Drehzahl - oder einer dazu adäquaten Vergleichsgröße - kann somit entfallen.

Bei einem einfachen Förderer wird das Gewicht auf den einzelnen Förderbänder jeweils anhand der Anzahl der auf dem Förderband liegenden Güter bestimmt.

Bei einem weiteren, einfachen Förderer wird das Gewicht aus der Anzahl der auf dem Förderband liegenden Güter multipliziert mit einem mittleren Gütergewicht bestimmt. Falls das einzelne Gütergewicht nicht bekannt ist, wird einfach der mittlere Gewichtswert verwendet, der aus einer Statistik bekannt ist. Besonders vorteilhaft ist dies für Behälterförderer, da die Behälter wesentlich schwerer sind als die darin befindlichen Güter, so dass für die Ermittlung des Gewichts das Gütergewicht eine geringere Rolle spielt.

Wenn die Soll-Drehzahl des Antriebsmotors bei höherem zu transportierenden Gewicht derart vergrößert wird, dass die durch die Gewichtserhöhung bewirkte Ist-Drehzahlverringerung kompensiert wird, kann die gleiche Ist-Fördergeschwindigkeit für jeden Förderbandabschnitt eingestellt werden.

Die Steuerung der Soll-Drehzahl des Antriebsmotors kann kostengünstig erfolgen, wenn der Antriebsmotor ein ungeregelter Asynchronmotor ist, der von einem Frequenzumrichter angesteuert wird, und dass eine Soll-Drehzahländerung durch Veränderung der Frequenz und/oder der Spannung erfolgt.

Zweckmäßigerweise bilden die beiden Förderbänder einen Güterspeicher.

Die auf das Verfahren bezogene Lösung sieht vor, dass jeweils das Gewicht der auf den Förderbändern liegenden Güter bestimmt und die Drehzahl des zum jeweiligen Förderband gehörenden Antriebsmotors in Anhängigkeit vom Gewicht der auf dem Förderband liegenden Güter gesteuert wird.

Die Erfindung wird anhand der Zeichnung näher erläutert. Es zeigen:
- Fig. 1: einen erfindungsgemäßen Förderer mit zwei Förderabschnitten,
- Fig. 2: das Blockschaltbild einer Steuerstrecke eines Förderabschnittes gemäß Fig. 1 und
- Fig. 3: einen aus dem Stand der Technik bekannten Förderer mit zwei Förderabschnitten.

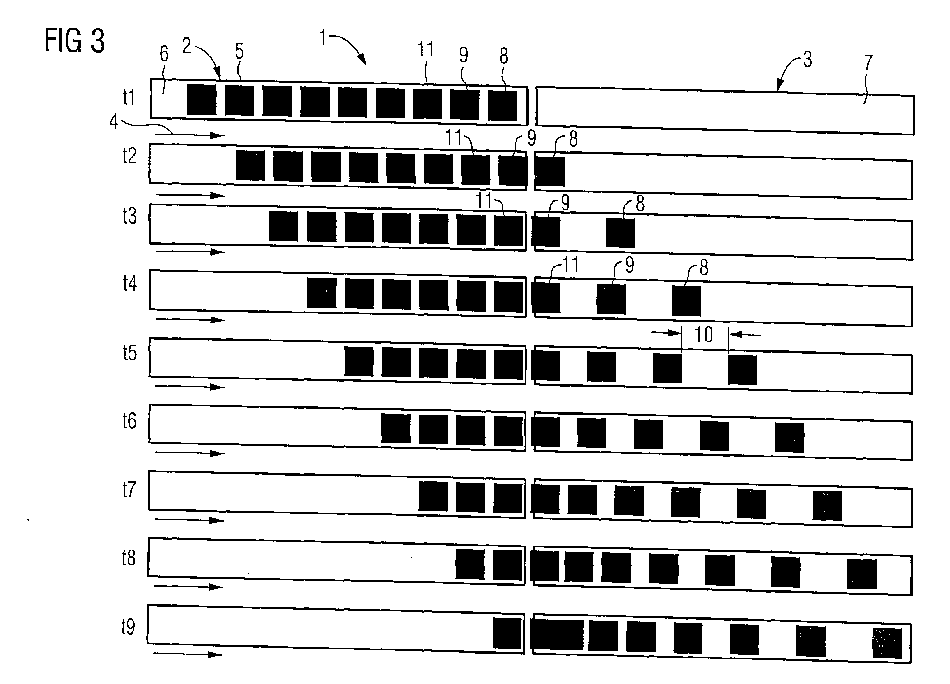

Fig. 3 zeigt eine aus dem Stand der Technik bekannte Fördererkombination 1 mit zwei Förderern 2, 3, einem Förderer 2 und einem Folgeförderer 3, zu den Zeitpunkten t₁ - t₉. Die Förderrichtung ist durch den Pfeil 4 gekennzeichnet. In dieser schematischen Darstellung wird jeder Förderer 2, 3 durch ein Förderband 6, 7 dargestellt, der Förderer 2 durch das Förderband 6 und der Folgeförderer 3 durch das Folgeförderband 7. Die auf einem Förderband 6, 7 transportierten Güter 5 sind gleichfalls schematisiert und liegen auf Fördererabschnitten auf. Bei den Gütern 5 kann es sich um einzelne Gepäckstücke aber auch um Behälter handeln, die jeweils ein oder mehrere Gepäckstücke transportieren. Jedes Förderband 6, 7 wird dabei von einem ungeregelten, ungesteuertem, lastmomentabhängigem Asynchronmotor (nicht dargestellt) mit einer fest eingestellten und unveränderlichen Soll-Drehzahl nₛₒₗₗ angetrieben.

Zum Zeitpunkt t₁ werden neun äquidistant verteilte Güter 5 vom Förderband 6 in Förderrichtung 4 zum Folgeförderband 7 befördert. Aufgrund der lastmomentabhängigen Ist-Drehzahl n_{Ist}(t) des Asynchronmotors laufen die Förderbänder 6, 7 zum Zeitpunkt t₁ unterschiedlich schnell. Das leere Folgeförderband 7 läuft schneller als das mit dem Gewicht von neun Gütern 5 belastete Förderband 6.

Zum Zeitpunkt t₂ ist das in Förderrichtung 4 betrachtete erste Gut 8 vom Folgeförderband 7 übernommen worden. Auf dem Förderband 6 werden zum Zeitpunkt t₂ acht Güter 5 transportiert. Die Ist-Drehzahl n_{Ist}(t) des Asynchronmotors und somit die Ist-Fördergeschwindigkeit v_{Ist}(t) des Folgeförderbandes 7 ist bezogen auf den Zeitpunkt t₁ aufgrund des Gewichtes des ersten Gutes 8 verringert. Dadurch hat sich die Ist-Drehzahl n_{Ist}(t) des Asynchronmotors und damit die Ist-Fördergeschwindigkeit v_{Ist}(t) des Förderbandes 6 gegenüber dem Zeitpunkt t₁ erhöht, da nur noch acht Güter 5 transportiert werden.

Zum Zeitpunkt t₃ transportiert das Folgeförderband 7 zwei Güter 5 und das erste Förderband 6 noch sieben Güter 5. Die Ist-Fördergeschwindigkeit v_{Ist}(t) des Förderbandes 6 ist bezogen auf den Zeitpunkt t₂ erneut erhöht, wohingegen sich die Ist-Fördergeschwindigkeit v_{Ist}(t) des Folgeförderbandes 7 durch die Übernahme des zweiten Guts 9 weiter verlangsamt hat. Aufgrund der unterschiedlichen Ist-Fördergeschwindigkeiten v_{Ist}(t) des Folgeförderbandes 7 vom Zeitpunkt t₂ bis zum Zeitpunkt t₃ ist das erste Gut 8 schneller transportiert worden als das zweite Gut 9 auf dem Förderband 6. Somit stellt sich ein Abstand 10 zwischen dem ersten Gut 8 und dem zweiten Gut 9 auf dem Folgeförderband 7 ein, der größer ist als der Abstand zwischen dem ersten Gut 8 und dem zweiten Gut 9 zum Zeitpunkt t₁ auf dem Förderband 6.

Nach der Übergabe des in Förderrichtung 4 gesehen dritten Gutes 11 vom Förderband 6 auf das Folgeförderband 7 erhöht sich wiederum die Ist-Fördergeschwindigkeit v_{Ist}(t) des Förderbandes 6, wohingegen sich das Folgeförderband 7 wiederum verlangsamt. Dies führt dazu, dass der Abstand zwischen dem zweiten Gut 9 und dem dritten Gut 11 verglichen mit dem Abstand 10 geringer ist.

Zum Zeitpunkt t₅ ist die Ist-Fördergeschwindigkeit v_{Ist}(t) des Förderbandes 6 annähernd der des Folgeförderbandes 7. Zu den Zeitpunkten t₆, t₇, t₈, t₉ beschleunigt sich jeweils die Ist-Fördergeschwindigkeit v_{Ist}(t) des Förderbandes 6 gegenüber dem vorhergehenden Zeitpunkt und im Gegenzug verringert sich jeweils die Ist-Fördergeschwindigkeit v_{Ist}(t) des Folgeförderbandes 7, so dass wie zum Zeitpunkt t₉ dargestellt zwei Güter 5 auf dem Folgeförderband 7 miteinander kollidieren.

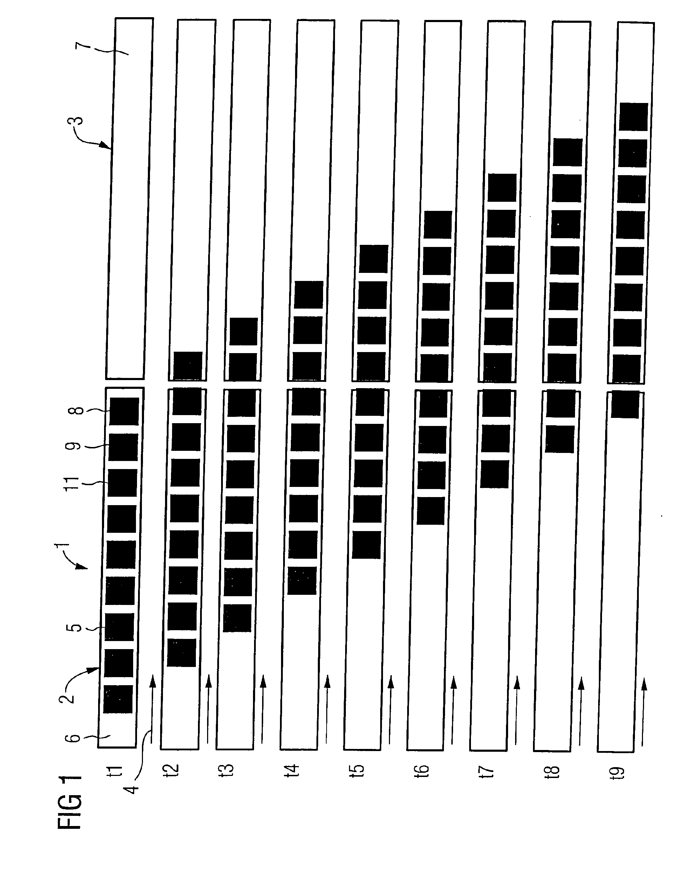

Fig. 1 zeigt einen Förderer 1 mit einem Förderabschnitt 2 und einem Folgeförderabschnitt 3. Gleichfalls ist die Förderrichtung durch den Pfeil 4 repräsentiert. Im wesentlichen wird der Förderabschnitt 2 durch ein Förderband 6 dargestellt und der Folgeförderabschnitt 3 durch das Folgeförderband 7. Nicht dargestellt sind die die Förderbänder 6,7 jeweils antreibenden lastmomentabhängigen Asynchronmotoren.

Ein Frequenzumrichter 21 speist die Asynchronmotoren mit einer veränderlichen Frequenz f_{Soll}(t) und/oder veränderlichen Spannung U_{Soll}(t), die die Soll-Drehzahl des Asynchronmotors n_{Soll}(t) gesteuert. In Abhängigkeit vom Gesamtgewicht der von einem Förderband 6, 7 transportierten Gütern 5, wird für den zugeordneten Asynchronmotor die Soll-Drehzahl n_{Soll}(t) eingestellt. Entsprechend der Drehmoment-Kennlinie der Asynchronmotoren wird die sich durch eine Lastmomentänderung auftretende Ist-Drehzahländerung Δv kompensiert, indem der dem Asynchronmotor zugeordnete Frequenzumrichter 21 eine geänderte Frequenz und/oder Spannung an den Asynchronmotor weitergibt, die entgegen der Ist-Drehzahländerung Δv wirkt.

Die von jedem Förderabschnitt 6, 7 aufgenommenen und abgegebenen Güter 5 werden mittels einer nicht dargestellten Sensorik wie Barcode-Scanner oder Lichtschranken erfasst bzw. gezählt. Somit ist jederzeit bekannt, welche Güter 5 und/oder wie viele Güter 5 sich auf dem Förderabschnitt 6, 7 befinden.

Zum Zeitpunkt t₁ ist die Soll-Drehzahl n_{Soll}(t) des Asynchronmotors des Förderbandes 6 größer eingestellt als die Soll-Drehzahl n_{Soll}(t) des Folgeförderbandes 7. Da das Förderband 6 mit dem Gewicht der neun Güter 5 belastet ist, stellt sich eine Ist-Drehzahl n_{Ist} und somit eine Ist-Fördergeschwindigkeit v_{Ist} des Förderbandes 6 ein, die der Ist-Drehzahl n_{Ist} und somit die Ist-Fördergeschwindigkeit vᵢₛₜ des noch unbelasteten Folgeförderbandes 7 entspricht. Somit laufen beide Förderbänder 6, 7 gleich schnell und synchron zueinander.

Zum Zeitpunkt t₂ ist das erste Gut 8 dem Folgeförderband 7 übergeben, so dass auf dem Förderband 6 acht Güter 5 abgetragen werden. Bezogen auf den Zeitpunkt t₁ wird das Förderband 6 mit einer geringeren Soll-Drehzahl n_{Soll}(t) angesteuert, da sich das zu befördernde Gesamtgewicht verringert hat. Entgegengesetzt dazu weist die Soll-Drehzahl n_{Soll}(t) des Asynchronmotors des Folgeförderbandes 7 eine Erhöhung gegenüber dem Zeitpunkt t₁ auf, da das Gewicht des ersten Guts 8 das Folgeförderband 7 belastet. Die Änderungen der Soll-Drehzahlen n_{Soll}(t) der Asynchronmotoren sind so gewählt, dass die Ist-Fördergeschwindigkeit vᵢₛₜ zum Zeitpunkt t₂ gegenüber dem Zeitpunkt t₁ unverändert bleibt. Somit laufen die beiden Förderbänder 6, 7 weiterhin gleich schnell.

Zum Zeitpunkt t₃ ist das zweite Gut 9 dem Folgeförderband 7 übergeben. Aufgrund des Gleichlaufes der beiden Förderbänder 7, 8 mit identischer Ist-Fördergeschwindigkeit vᵢₛₜ sind die beiden vorderen Güter 8, 9 äquidistant zueinander und weisen somit den identischen Abstand voneinander auf, wie zum Zeitpunkt t₁.

Die zum Zeitpunkt t₃, t₄, t₅, t₆, t₇, t₈ und t₉ sich verändernden Lastmomente M_{R}(t) für die beiden Förderbänder 6, 7, wobei das Lastmoment M_{R}(t) beim Förderband 6 abnimmt und das Lastmoment M_{R}(t) beim Folgeförderband 7 sukzessive zunimmt, ist aufgrund der dem entgegen wirkenden Ansteuerung der jeweiligen Asynchronmotoren ohne Auswirkung auf die Ist-Fördergeschwindigkeit vᵢₛₜ der betrachteten Förderabschnitte 2, 3.

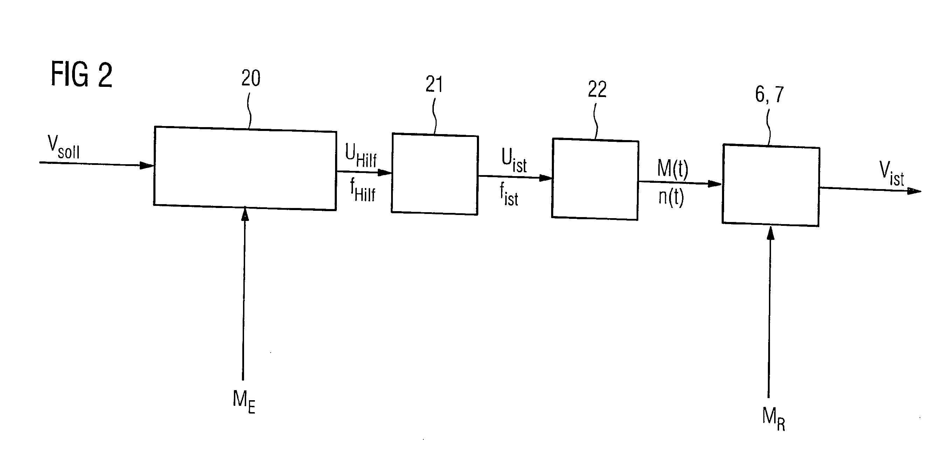

Fig. 2 zeigt in schematischer Darstellung anhand eines Blockschaltbildes das Grundprinzip zur Steuerung der auf dem Förderabschnitt 2, 3 von dem Förderband 6, 7 beförderten Güter 5. Eine Steuerung 20 wirkt dabei auf einen Frequenzumrichter 21 ein, der wiederum mittels der Spannung und/oder der Frequenz den lastmomentabhängigen Antriebsmotor 22 beeinflusst, so dass dieser eine Soll-Drehzahl n_{Soll}(t) an ein Förderband 6,7 abgibt, welches die darauf befindlichen Güter 5 mit einer Fördergeschwindigkeit v befördert.

Der Steuerung 20 wird eine vorbestimmte Soll-Fördergeschwindigkeit v_{Soll} als konstante Steuergröße vorgegeben; sie verknüpft ein geschätztes oder berechnetes Lastmoment M_{E}(t), die im wesentlichen das reale Lastmomement M_{R}(t) wiedergibt, mit der Soll-Fördergeschwindigkeit v_{Soll} und formt daraus für ein nachgeordnetes Stellglied, den Frequenzumrichter 21, eine Hilfsspannung U_{Hilf}(t) und eine f_{Hilf}(t) als Stellgröße. Der Frequenzumrichter 21 transformiert als Stellglied die Hilfsspannung U_{Hilf}(t) und die Hilfsfrequenz f_{Hilf}(t) in eine Spannung U_{Ist}(t) und Frequenz f_{Ist}(t) für den Antriebsmotor 22 um. Gleichfalls stellt sich am Antriebsmotor 22 unter Einwirkung des tatsächlich auftretenden Lastdrehmoments M_{R}(t) eine Ist-Drehzahl n_{Ist} ein, die das Förderband 6, 7 mit einer Ist-Fördergeschwindigkeit v_{Ist} antreibt. Die Motordrehzahl n_{Ist} ist lastmomentabhängig, d.h. die Ist-Fördergeschwindigkeit v_{Ist} resultiert aus der vom Frequenzumrichter 21 den Antriebsmotor 22 speisenden Spannung U_{Ist}(t) und Frequenz f_{Ist}(t), die abhängig von den vom Förderband 6, 7 zu transportierenden Güter 5 von der Steuerung 20 bestimmt wurde.

Das geschätzte oder berechnete Lastmoment M_{E}(t) einer jeden Steuerstrecke kann dabei durch unterschiedliche Verfahren bestimmt werden. Wenn die jeweiligen Einzelgewichte der Güter 5 eines Förderabschnittes 6, 7 bekannt sind, kann das Gesamtgewicht durch einfaches aufsummieren bestimmt werden. Sind nur einige Gewichte bekannt und andere nicht, so werden für die Güter 5, deren Gewicht unbekannt ist, mittlere Gewichtswerte angenommen, um dann die Summe zu bilden. Falls keine Gütergewichte bekannt sind, so kann die Anzahl der auf dem Förderband 6, 7 befindlichen Güter 5 mit einem mittleren Gütergewicht multipliziert werden, um das Gesamtgewicht zu bestimmen.

Für jedes Gesamtgewicht kann mit Hilfe der Drehmoment-Kennlinie des Asynchronmotors die Ist-Drehzahländerung Δv gegenüber der unbelasteten Ist-Drehzahl bestimmt werden, so dass sich die von der Kennlinie abgeleitete Ist-Drehzahl der Steuerung 20 zugeführt wird.

## Patentansprüche

1. Förderer (1) für Güter (5), insbesondere Behälter für Gepäckstücke,
mit zumindest zwei hintereinander geschalteten endlos umlaufenden Förderbändern (6, 7), in Förderrichtung (4) gesehen einem Förderband (6) und einem Folgeförderband (7), die jeweils von einem Antriebsmotor (22) mit lastmomentabhängiger Drehzahl angetrieben werden,
wobei die Förderbänder (6, 7) derart in Förderrichtung (4) hintereinander angeordnet sind, dass die vom Förderband.(6) beförderten Güter (5) vom Folgeförderband (7) übernommen werden,
**dadurch gekennzeichnet,**
**dass** jeweils das Gewicht der auf den Förderbändern (6, 7) liegenden Güter (5) bestimmt und die Drehzahl des zum jeweiligen Förderband (6, 7) gehörenden Antriebsmotors (22) in Abhängigkeit vom Gewicht der auf dem Förderband (6, 7) liegenden Güter (5) gesteuert wird.

2. Förderer (1) nach Anspruch 1,
**dadurch gekennzeichnet,**
**dass** Gewicht jeweils anhand der Anzahl der auf dem Förderband (6, 7) liegenden Güter (5) bestimmt wird.

3. Förderer (1) nach Anspruch 2,
**dadurch gekennzeichnet,**
**dass** das Gewicht aus der Summe der einzelnen Gütergewichte bestimmt wird.

4. Förderer (1) nach Anspruch 2,
**dadurch gekennzeichnet,**
**dass** das Gewicht aus der Anzahl multipliziert mit einem mittleren Gütergewicht bestimmt wird.

5. Förderer (1) nach einem der vorhergehenden Ansprüche,
**dadurch gekennzeichnet,**
**dass** die Soll-Drehzahl des Antriebsmotors (22) mit höherem Gewicht derart vergrößert wird, dass die durch die Gewichtserhöhung bewirkte Ist-Drehzahlverringerung kompensiert wird.

6. Förderer (1) nach einem der vorhergehenden Ansprüche,
**dadurch gekennzeichnet,**
**dass** der Antriebsmotor (22) ein ungeregelter Asynchronmotor ist, der von einem Frequenzumrichter (21) angesteuert wird und dass eine Soll-Drehzahländerung durch Veränderung der Frequenz und/oder der Spannung erfolgt.

7. Förderer (1) nach einem der vorhergehenden Ansprüche,
**dadurch gekennzeichnet,**
**dass** die beiden Förderbänder (6, 7) einen Güterspeicher bilden.

8. Verfahren zur Steuerung eines Förderers (1) für Güter (5), insbesondere Behälter für Gepäckstücke,
mit zumindest zwei hintereinander geschalteten endlos umlaufenden Förderbändern (6,7), in Förderrichtung (4) gesehen einem Förderband (6) und einem Folgeförderband (7), die jeweils von einem Antriebsmotor (22) mit lastmomentabhängiger Drehzahl angetrieben werden,
wobei die Förderbänder (6, 7) derart in Förderrichtung (4) hintereinander angeordnet sind, dass die vom Förderband (6) beförderten Güter (5) vom Folgeförderband (7) übernommen werden,
**dadurch gekennzeichnet,**
**dass** jeweils das Gewicht der auf den Förderbändern (6, 7) liegenden Güter (5) bestimmt und die Drehzahl des zum jeweiligen Förderband (6, 7) gehörenden Antriebsmotors (22) in Abhängigkeit vom Gewicht der auf dem (6, 7) liegenden Güter (5) gesteuert wird.
